(19) Europäisches Patentamt

European Patent Office

Office européen des brevets

(11) **EP 0 823 197 B1**

(12) **EUROPEAN PATENT SPECIFICATION**

(45) Date of publication and mention
of the grant of the patent:
**13.03.2002 Bulletin 2002/11**

(51) Int Cl.[7]: **A01C 15/00**, G01C 9/00,
A01D 75/28

(21) Application number: **97202207.3**

(22) Date of filing: **14.07.1997**

(54) **An implement for spreading material**

Streuer

Epandeur

(84) Designated Contracting States:
**AT CH DE DK FR GB LI NL**

(30) Priority: **29.07.1996 EP 96202143**

(43) Date of publication of application:
**11.02.1998 Bulletin 1998/07**

(73) Proprietor: **MAASLAND N.V.**
**3155 PD Maasland (NL)**

(72) Inventor: **de Groen, Franciscus Johannes**
**Adrianus**
**3225 CB Hellevoetsluis (NL)**

(74) Representative: **Corten, Maurice Jean F.M. et al**
**Octrooibureau Van der Lely N.V.**
**Weverskade 10**
**3155 PD Maasland (NL)**

(56) References cited:
**EP-A- 0 407 705          EP-A- 0 537 857**
**WO-A-94/25834**

• **SECONDA: "quand la moissonneusese**
**dehanche" TOP CULTURES-MOTORISATION,**
**vol. 1991, no. 6, June 1991, pages 24-28,**
**XP000206855**

**Description**

The invention relates to an implement for spreading material, having a frame and, mounted thereon, a hopper.

Such an implement is known from document EP 537 857.

After the above-mentioned implement has been coupled to a tractor, the implement has to be positioned relative to the tractor before the material is spread. This is necessary for obtaining a suitable spread pattern of the material to be spread. In this situation, the implement has to be positioned in the direction of travel as well as transversely thereto relative to the parcel to be spread. It often happens that the implement is positioned by the farmer "at sight" or that the implement is provided with a mechanical angle measuring instrument which is designed as a pendulum including at its free end a bob and a calibrated scale therebehind.

The above-mentioned ways of positioning have the disadvantage that they are inaccurate and may easily lead to mistakes. For example, contamination may occur between the pendulum and the calibrated scale as a result of which the pendulum is stuck; moreover, the calibrated scale is usually hardly legible so that the farmer may easily make a mistake when reading off this calibrated scale.

The invention aims at obtaining an implement in which the above-mentioned drawbacks do not occur or are at least limited to a significant extent.

In accordance with the invention, this is achieved in that the implement comprises an electronic measuring device including a clinometer and indication means providing the farmer with information about the angle at which the implement is situated relative to a reference plane. Thus, by means of electronics, it is possible to determine very accurately the angle at which the implement is situated relative to the reference plane. According to an inventive feature, the indication means include a device with visual indication giving the angle at which the implement is situated relative to the reference plane. The device with visual indication is preferably designed as a screen. According to again an other feature of the invention, the indication means include a loudspeaker by means of which an acoustic signal is supplied that is normative for the angle at which the implement is situated relative to the reference plane. When positioning the implement, in order to know whether the implement is properly positioned relative to the reference plane, the farmer only needs to rely on the acoustic signal. For example, a correct positioning may be represented by a bleep which is recognizable for the farmer. In a preferred embodiment, the reference plane is a horizontal plane, which means that, after having coupled the implement to the tractor, the farmer has to dispose of a more or less horizontal platform on which he will be able to position the implement.

In accordance with an other inventive feature, the electronic measuring device includes reset means for adjusting the angle of the implement relative to the reference plane at a specific value and recording this angle value in a memory. When the farmer does not dispose of a substantially horizontal platform, but e.g. of a platform situated at an angle of inclination, it is possible to achieve a correct adjustment of the implement with respect to the platform with the aid of the reset means. In this case the farmer will have to proceed as follows:

After the farmer has coupled the implement to the tractor and has driven same onto the platform, the height of a number of points of the implement, e.g. the four angular points, with respect to the platform is measured. If the farmer wishes to position the machine parallel to the platform, he will have to modify the position of the implement with respect to the platform until the four angular points are equal in height relative to the platform. When the latter position has been realized, the farmer can press a reset button, after which a specific value is stored in the electronic device, which value is considered as a standard for this adjustment. When, after some time, the implement is again coupled to the tractor, the farmer will again be able to obtain the aforementioned adjustment by driving to the platform, retrieving there the above-mentioned value and modifying the position of the implement with respect to the platform until the aforementioned value has been achieved.

According to an other aspect of the invention, the indication means give the angle at which the implement is situated relative to the direction of travel of the implement. Due to the fact that the aforementioned angle can be determined and adjusted accurately, it is possible, e.g. during top-dressing the parcel, in which situation the implement usually has to be in a somewhat forwardly tilted position, to obtain an accurate spread pattern. In accordance with again an other aspect of the invention, the indication means give the angle at which the implement is situated transversely to the direction of travel of the implement. By means of an accurate adjustment of the implement, transversely to the direction of travel, it is possible to obtain a very suitable spread pattern during e.g. edge spreading of the parcel.

In accordance with an other inventive feature, the implement is a fertilizer broadcaster.

The invention will now be further explained with reference to the accompanying drawings, in which:

Figure 1 is a side view of an implement for spreading material, comprising an electronic measuring device with which the actual weight of at least the material present in the hopper can be determined;
Figure 2 shows, to an enlarged scale, a portion of the implement shown in Figure 1, taken on line II-II therein;
Figure 3 shows, to an enlarged scale, the upper portion of the implement of Figure 1.
Figure 4 is a plan view of a portion of the implement, taken in the direction of arrow IV in Figure 3;

Figure 5 is a cross-sectional view of an enlarged detail of the implement taken on line V-V in Figure 2;

Figure 6 shows schematically, in a side view, an implement in accordance with the invention on a slope;

Figure 7 shows schematically, in a rear view, an implement according to the invention on a slope;

Figure 8 shows schematically, in a side view, a further embodiment according to the invention of an implement on a slope;

Figure 9 shows schematically, in a side view, a still further embodiment according to the invention;

Figure 10 is a schematic view of an electronic measuring and control system in accordance with the invention.

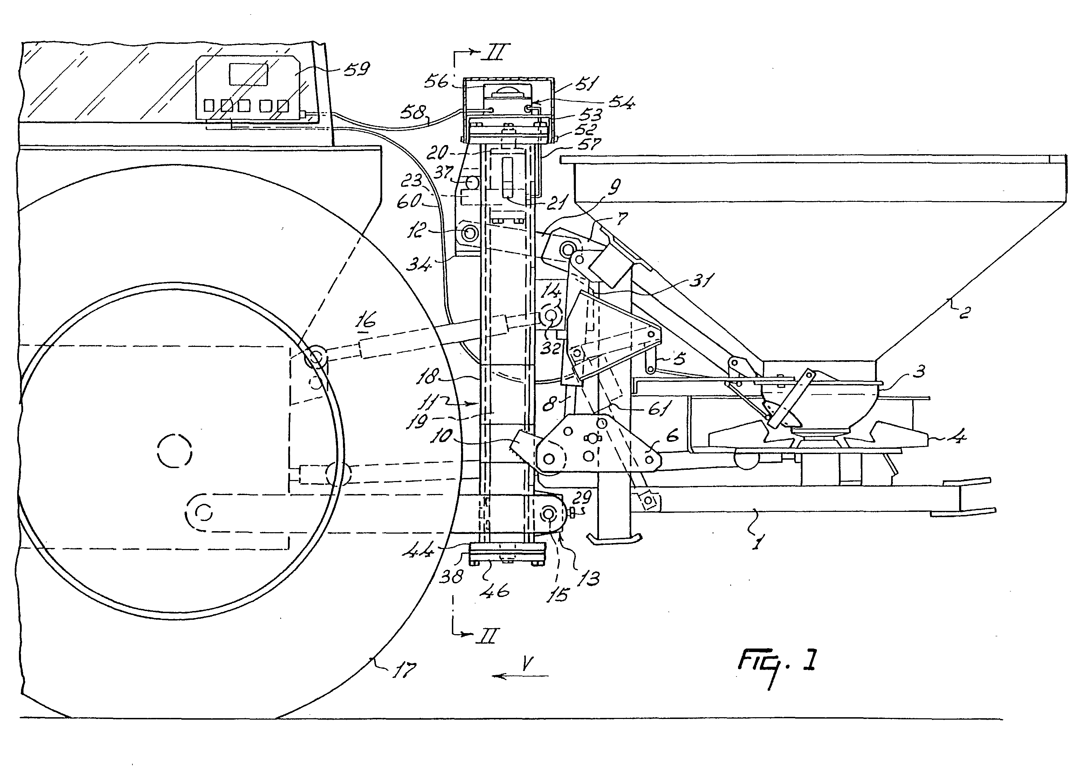

In an embodiment as shown in Figure 1, an implement in accordance with the invention is shown as a spreader implement, which is drivable during operation and which is more specifically used for spreading material over agricultural lands. The implement has a frame 1, on which a storage bin or hopper 2 is disposed. At its bottom side, the hopper 2 is provided with a dosing member 3 under which there is a spreader member 4. The dosing member 3 can be adjusted with the aid of an adjusting mechanism 5. In addition, the frame 1 includes strips 6, 7 which are provided with bores and can act as coupling points. For the purpose of edge spreading, the implement further includes a cylinder 8 which can be operated hydraulically and by means of which the implement can be tilted about an axis in the direction of operative travel V.

The frame 1 is coupled to an intermediate trestle 11 by means of coupling members 9, 10. The coupling member 9 has one end connected to the strip 7 and the other end to coupling point 12. The two coupling members 10 are located at the rear side of the intermediate trestle 11 and comprise strips 10A which are connected to the legs of the intermediate trestle 11. The two coupling members 10 are connected in a similar manner as the coupling member 9 to the intermediate trestle 11: by means of one end to strips 6 and by means of the other end to the two coupling members 13 of the intermediate trestle 11. The intermediate trestle 11 is provided at its rear side with coupling members 14 and 15, by means of which the implement is couplable to a lifting hitch 16 of a tractor 17 or a suchlike vehicle. In view of the fact that the implement is inclined and as a consequence thereof is rotated relative to the intermediate trestle 11, the coupling members are constituted by ball couplings. In order to facilitate coupling and uncoupling of the intermediate trestle 11 to/from the tractor 17 and the frame 1, the intermediate trestle is provided at its upper end with two hooks 21, by means of which the intermediate trestle 11 can be lifted.

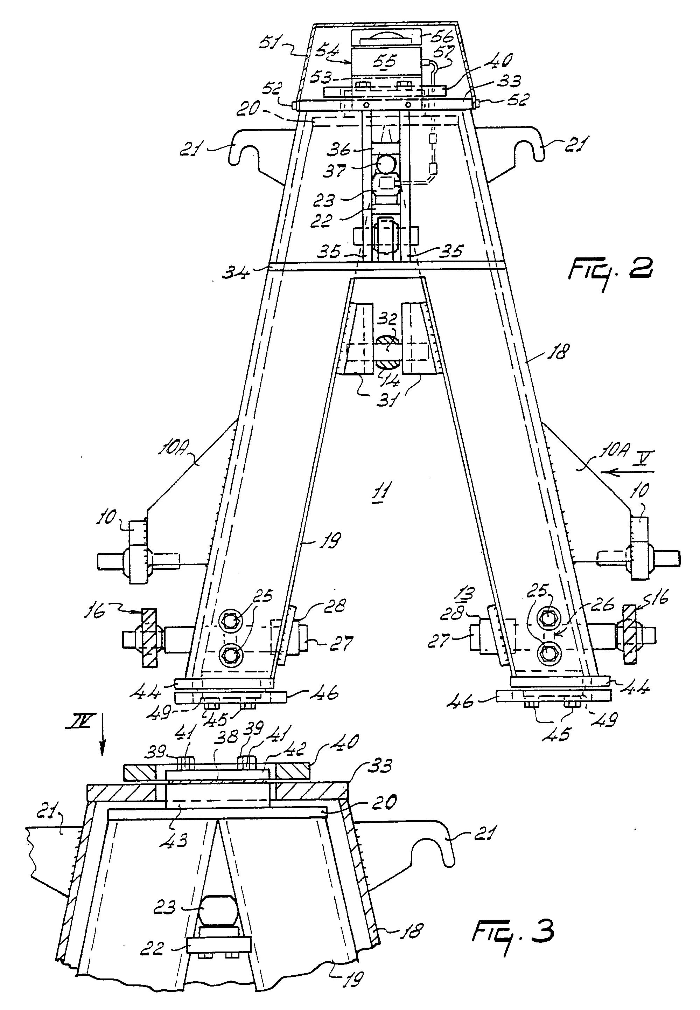

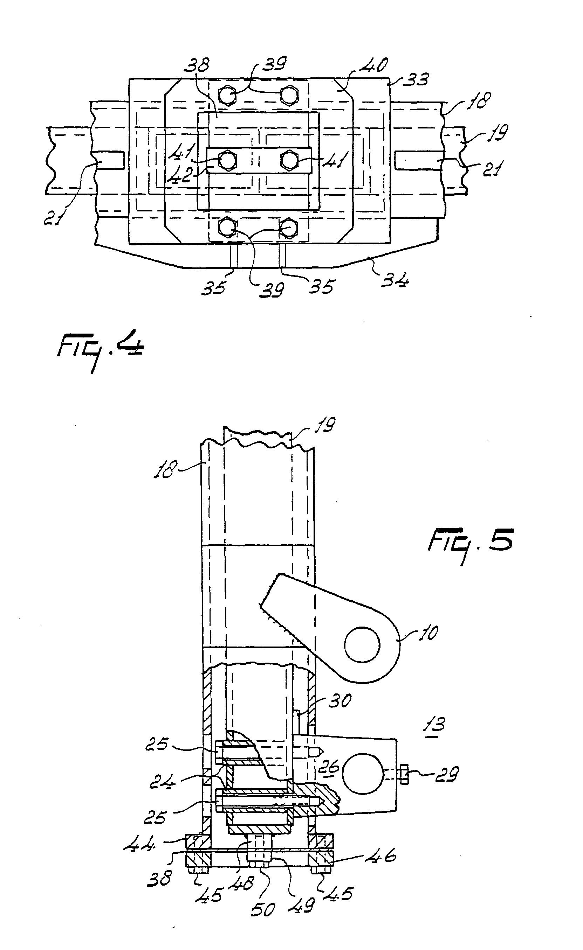

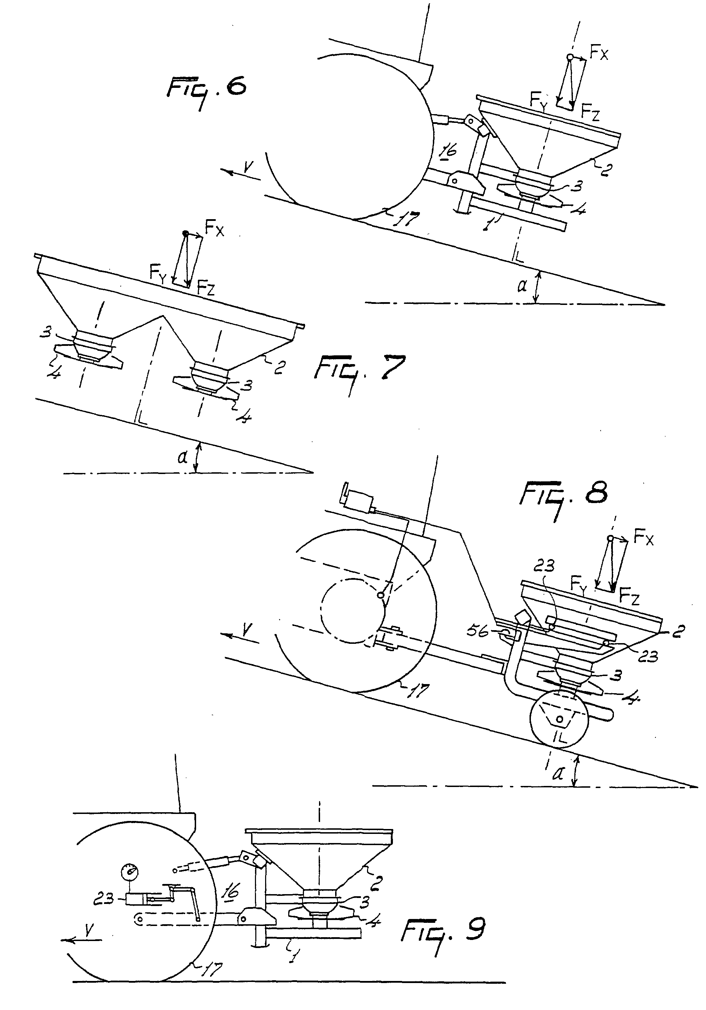

As is shown in Figure 2, the intermediate trestle 11 has an outer trestle 18 and an inner trestle 19. The inner trestle 19 is Λ-shaped and made, for example, of tubular material. At the base of the Λ-shaped inner trestle 19 there is a strip 20 which interconnects the two legs 19 of the Λ-shape as well as a strip 22 between the two legs 19 (Figure 3). A weight measuring unit 23 is positioned on the strip 22. The weight measuring unit 23 may, for example, be a strain gauge or load cell, which are known per se. Alternatively, the weight measuring unit 23 may consist, as is shown in Figure 8, of a plurality of weighing boxes 23, which support, for example, the hopper of a tractor-drawn spreader. In a still further embodiment, as shown in Figure 9, the weight measuring unit 23 is constituted by a pressure meter, which measures the pressure transferred via the arms of the lifting hitch 16 of the tractor 17 into the hydraulic system of the lifting hitch 16, in dependence on the weight of the implement.

As is shown in Figure 5, the two coupling members 15 are attached to the inner trestle 19. The tubular profile 19 is provided with guide bushings 25, through each of which a bolt 25 is passed, by means of which the block 26 can be pulled tight against the tubular beam 19. The block 26 has a bore through which a pin 27 has been inserted and to which the arms 15 of the lifting hitch 16 of the tractor 17 can be coupled. The pin 27 is further passed through a guide bushing 28 (Figure 2) which is welded to the inner trestle 19. The pin 27 is locked against shifting in the block 26 and in the guide bushing 28 by a bolt 29 screwed into the block 26. The block 26 can be removed by loosening the bolts 25 and removal of the pin 27. In order to facilitate the application of the block 26 against the inner trestle 19, a strip-like stop 30 is attached to the inner trestle 19.

As is shown in Figure 2, the coupling point 14 includes two folded-over strips 31, which are each attached to a leg of the inner trestle 19. The strips 31 are provided with a bore, through which a pin 32 can be inserted. The top rod of the lifting hitch 16 can be attached to the pin 32.

The outer trestle 18 is made from a U-shaped profile and bears against the inner trestle 19. The two U-shaped legs of the outer trestle 18 are interconnected near the base of the Λ-shape by a framework-like plate 33. A horizontal strip 34 interconnecting the legs of the outer trestle 18 is arranged near the coupling member 14. Between the framework-like plate 33 and the horizontal strip 34 there are disposed, at the leading side of the trestle and near the midway point, two vertical strips 35. The strips 35 are spaced apart in such a manner that the weight measuring unit 23 fits therebetween. At a short distance above the weight measuring unit 23 there is disposed between the strips 35 a horizontal strip 36 which retains a ball 37 between the weight measuring unit 23 and the strip 36 itself. The ball 37 provides that the forces of the outer trestle 18 are adequately transferred to the weight measuring unit 23 (concentrated or point load). So as to realize a purest possible vertical load on the weight measuring unit 23, horizontal leaf springs 38 are positioned between the outer trestle 18 and the inner trestle 19. Figures 3 and 4 illustrate how the uppermost leaf spring 38 is applied. The leaf spring 38 is clamped by means of bolts 39 between the framework-like plates 33 and 40. Moreover, the leaf spring 38 is clamped-in near the midway point by bolts 41, which draw small blocks 42 and 43 tightly against each other. The block 43 is disposed on the strip 20 of the inner trestle. The framework-like plates 33 and 40 are provided with an aperture in which the blocks 42 and 43 are accommodated, together with the leaf spring 38. At the bottom side of the intermediate trestle 11, a leaf spring 38 is disposed in a similar manner at each of the legs of the intermediate trestle 11 (Figure 5). At the bottom side of the U-shaped profile of the outer trestle 18, a U-shaped strip 44 is provided, against which a framework-like plate 46 can be bolted by means of bolts 45. The leaf spring 38 is retained between the U-shaped strip 44 and the framework-like plate 46. Near its midway point, the leaf spring 38 is also retained by the blocks 48 and 49, which are drawn tightly to each other by means of bolts 50. The block 48 is mounted on a plate 50 disposed at the bottom side of the tubular profile of the inner trestle 19. The thickness of the leaf springs 38 has been chosen such that it hardly influences the vertical motions of the inner trestle 19 relative to the outer trestle 18 and vice versa, whereas it counteracts a motion in the horizontal direction of the inner trestle 19 and the outer trestle 18. The leaf springs 38 may be formed from a plurality of thin, stacked leaf springs, or be constituted by one single leaf spring.

At the upper side of the intermediate trestle 11 there is present, as is shown in Figures 1 and 2, a plate iron box-like element 51. The box-like element 51 is bolted by bolts 52 to the framework-like plate 33. Disposed inside the box-like element 51 is a U-shaped plate 53 which is also bolted to the framework-like plate 33 by bolts 52. The U-shaped plate 53 is located at a slight distance above the bolts 39 and acts as a base plate for the required electronics 54, inter alia a microprocessor 55 and measured weight correction means 56.

The weight measuring unit 23 is connected by means of an electric cord 57 with plug connection to the microprocessor 55. In addition, the microprocessor 55 is connected by means of a further electric cord 58 with plug connection to a board computer 59 in the tractor 17 (or a suchlike vehicle). By means of an electric cord 60 with plug connection the board computer is connected to an adjusting member 61. The adjusting member 61 is controllable by means of the board computer 59 and has one side connected to the frame 1 and the other side to the adjusting mechanism 5. The adjusting member 61 may be in the form of an electrically or hydraulically controlled cylinder.

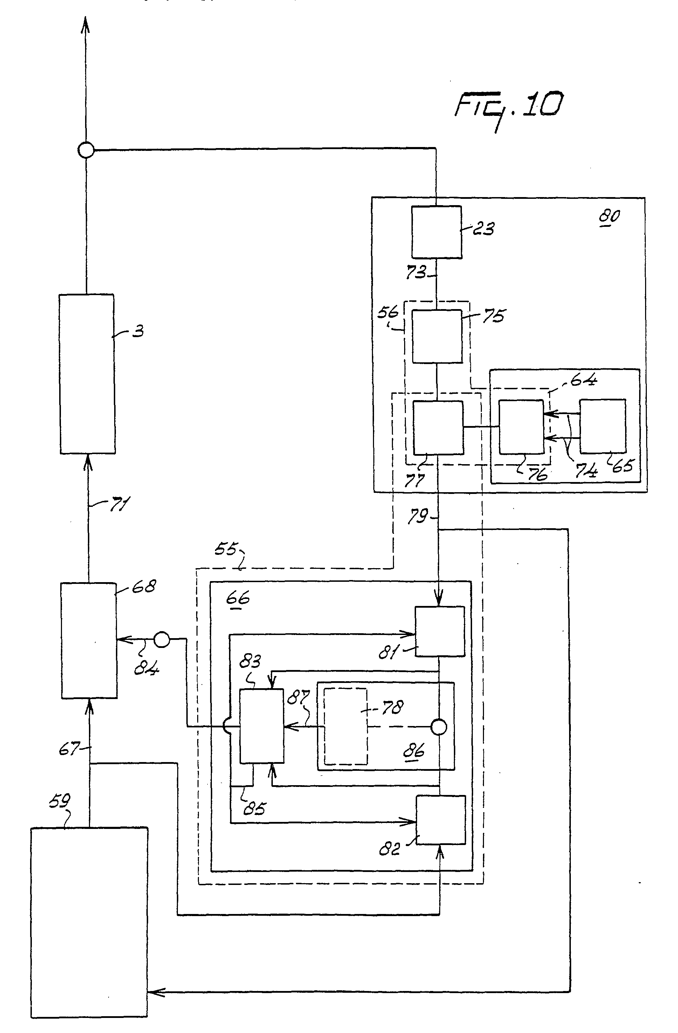

Figure 10 is a circuit diagram of an electronic measuring and control system, in which the above-mentioned components 3, 23, 55, 56, 59 are shown. The system operates as follows: for the assumed case in which fertilizer is to be spread, the board computer 59 supplies a desired bulk flow (kg/s) on the basis of the desired dose (kgs/m2), working width (m) and rate of travel (m/s) via the line 67. With the aid of a (non-shown) dose adjusting table, a control signal can be derived from the desired bulk flow for setting the dosing member 3. The value, supplied by the board computer 59, of the desired bulk flow can subsequently be corrected in the bulk flow correction means 68, when, for example, a test run proves that a correction factor is to be applied to the desired bulk flow, so as to have this flow actually leave the hopper 2. On the basis of the corrected bulk flow thus supplied via the line 71, the adjusting member 61 of the dosing member 3 is preset in the embodiment in accordance with the invention.

In this manner, a number of kgs of material will flow per unit of time from the hopper 2 via the dosing member 3. The weight measuring unit 23, in this case constituted by a weighing cell, measures how many kilogrammes are present in the hopper 2 at a given instant. To that end, the weight measuring unit 23 supplies over the line 73 a signal designating this weight, which signal is thereafter applied to measured weight correction means 56. The measured weight correction means 56 include a filter and correction unit 64 and a correction factor determining sensor 65. Using the filter and correction unit 64, on the one hand the signal supplied by the weight measuring unit 23 (weighing cell) via the line 73 is filtered, and on the other hand the signals supplied via the line 74 by the correction factor determining sensor 65 are filtered. In the embodiment of Figure 10, the correction factor determining sensor 65 is a clinometer or angle measuring cell, whose output signals, decomposed in two mutually perpendicular components, are supplied via the line 74. Consequently, the angle measuring cell is bidirectionally sensitive. During operation of the implement, disturbances occur due to, for example, oscillations of the power take-off shaft, shocks due to driving over uneven land, etc. So as to reduce these disturbances to a minimum, filters 75 and 76 are employed. The filters 75 and 76 are in the form of lowfrequency bandpass filters. The filter 75, which filters the signal supplied by the weight measuring unit 23, is a filter having an adjustable bandwidth, which adjustment can, for example, be effected manually or from the microprocessor 55. In practice, a filter 75 having a large bandwidth is chosen when the hopper 2 is being filled, as such a filter entails a relatively short time delay and the weight to be measured of the hopper 2 with contents can therefore be read almost immediately. During travel over a plot of land, unwanted frequencies are produced by, for example, unevennesses in the land. Since these frequencies are very annoying for an adequate weight determination, it is desirable to filter them off to the best possible extent. To achieve this, the bandpass response of the filter 75 is limited during travel on the field, whereby an increasing filtration of high frequency components in the signal supplied by the weight measuring unit 23 is obtained. The filter and correction unit 64 also comprises computing means 77, in which the signal supplied by the filter 75 of the weight measuring unit 23 is corrected. This correction is effected with the aid of the signals supplied by the correction factor determining sensor 65 via the filter 76. The manner in which the correction proper is realized, will be described in greater detail hereinafter.

The measured weight correction means 56 and the weight measuring unit 23 together form an electronic measuring device 80, by which over a line 79 the corrected instantaneous weight is conveyed to the board computer 59, in which it can be displayed on the screen of a display device and/or be stored in a memory.

Moreover, in the microprocessor 55 the corrected instantaneous weight is applied via a line 79 to bulk flow adjusting means 66. Using the bulk flow adjusting means 66, it is determined whether the value determined at consecutive instants of the corrected instantaneous weight corresponds to the value of desired bulk flow also applied to the bulk flow adjusting means 66. For the determination of the said values, the bulk flow adjusting means 66 comprise first summing means 81 and second summing means 82. The first summing means 81 include a memory in which an initial weight determined by the electronic measuring device 80 is stored. The first summing means 81 further include means for always determining the difference between the initial weight and the actual weight determined by the measuring device 80. In the table shown here, a numerical example is given of the values $\Sigma(\triangle M)_{calc}$ (columnn 3) supplied by the first summing means 81 at an initial weight of 1000 kgs (column 2). On the basis of the values $\Sigma(\triangle M)_{calc}$ supplied by the summing means 81 the quantity of kgs of material spread at a given instant can be determined; it can, for example, be read in the table that 5 kgs of material have been spread at the instant t = 1 and 11 kgs at the instant t = 2, etc.

| Time | Values applied to means 81 by electronic measuring device 80 | Value supplied by means 81 $\Sigma(\triangle M)_{calc}$ | Value supplied by means 82 $\Sigma(\triangle M)_{des}$ | Difference $|\Sigma(\triangle M)_{calc} -\Sigma(\triangle M)_{des}|$ |
|---|---|---|---|---|
| t=0 | 1000 ∗ | | | |
| 1 | 995 | 5 | 5 | 0 |
| 2 | 989 | 11 | 10 | 1 |
| 3 | 982 ∗ | 18 | 15 | 3 ∗∗ |
| 4 | 978 | 4 | 5 | 1 |
| 5 | 973 | 9 | 10 | 1 |
| 6 | 967 | 15 | 15 | 0 |
| 7 | 965 ∗ | 17 | 20 | 3 ∗∗ |
| 8 | 957 | 25 | 25 | 0 |

∗ to memory in 81

∗∗ exceeds threshold value (= 2 kgs)

By means of the second summing means 82 mentioned hereinbefore, the desired value $\Sigma(\triangle M)_{des}$ of the weight of material to be spread per time interval is determined on the basis of the desired bulk flow, in correspondence with the time interval between a difference determination in the first summing means 81. In the numerical example of the table, the desired weight $\Sigma(\triangle M)_{des}$ to be spread in 5 kgs in the interval between t = 0 and t = 1 and 10 kgs between t = 0 and t = 2.

In addition, the bulk flow adjusting means 66 include correction factor determining means 83, to which the value $\Sigma(\triangle M)_{calc}$ and $\Sigma(\triangle M)_{des}$ are applied and with the aid of which a bulk flow correction signal can be determined which is applied via line 84 to the bulk flow correction means 68, which can correct the desired bulk flow with this signal. The bulk flow correction signal is determined with the aid of a function associated with the correction factor determining means 83, with which each time $\dfrac{\Sigma(\triangle M)_{des}}{\Sigma(\triangle M)} \cdot f_A$

$f_A$ = instantaneous correction factor (wherein $f_A$ = 1 at t = 0) is calculated. In order to prevent that the bulk flow correction signals are conveyed to the bulk flow correction means at too high a rate and consequently there is risk of an unstable control, it is previously determined that the bulk flow correction signals are supplied at a rate which does not exceed a maximum value. To that end, a condition function 86 is incorporated in the bulk flow adjusting means 66. Using this condition function 86, it is determined whether the difference between $\Sigma(\triangle M)_{calc}$ and $\Sigma(\triangle M)_{des}$ is sufficiently large to proceed to the readjustment of the desired bulk flow. In the condition function 86 the value of the difference between $\Sigma(\triangle M)_{calc}$ and $\Sigma(\triangle M)_{des}$ is compared to a previously incorporated threshold value 78 for readjustment of the desired bulk flow. Reverting to the numerical example of the table, this threshold 78 value may be set at 2 kgs. From column 5 of the table it can be derived that up to and inclusive of the instant t = 2 the difference between $\Sigma(\triangle M)_{calc}$ and $\Sigma(\triangle M)_{des}$ does not exceed this threshold value 78, so in spite of the fact that there is a difference between the desired and the actual bulk flow, no bulk flow correction signal is supplied, so that no readjustment is effected. Not until the instant t = 3 the value of the difference between $\Sigma(\triangle M)_{calc}$ and $\Sigma(\triangle M)_{des}$ exceeds the threshold value 78 and a signal is applied with the aid of the condition function via a line 87 to the correction factor determining unit 83, which subsequent thereto applies a bulk flow correction signal to the bulk flow correction means 68. At that instant a readjustment of the desired bulk flow is a fact. After the bulk flow correction signal has been outputted, the correction factor determining means 83 apply, via a line 85 a reset signal to the first summing means 81 and to the second summing means 82, whereafter these means start again at the same instant with a determination of a new sequence of values of $\Sigma(\triangle M)_{calc}$ and $\Sigma(\triangle M)_{des}$. After the reset signal the old initial weight will be erased from the memory of the first summing means 81, and the memory is filled with the actual value of the weight determined by the weight measuring unit 23; in this way, at the instant t = 3, the value 982 is entered into in the numerical example in the memory, whilst 1000 is erased from the memory (see column 1), whereafter the procedure described in the foregoing starts again from the beginning.

The mode of operation of the above-described implement according to the invention will now be described in greater detail with reference to Figures 6 to 9.

As has already been said earlier in the description, it is possible to determine, using the intermediate trestle 11, at least the weight of the material present in the hopper 2. For that purpose a vertically directed concentrated load is exerted by the outer trestle 18 on the weight measuring unit 23, which load results from the weight of the outer trestle 18 and the weight of the implement coupled to the coupling points 10 and 12. A limiting condition for a correct measurement of such a concentrated load is that during the measuring operation the weight measuring unit 23 must be in a horizontal position. If the weight measuring unit 23 deviates from the horizontal, for example when the unit moves in a direction up or transverse to a slope, then the weight measuring unit 23 will not measure the actual weight of the implement, which weight is designated in Figures 6 to 8 by the component $F_z$, but then the weight measuring unit 23 will determine the component $F_y$, as in this case the weight measuring unit 23 is located at an angle of inclination ($\alpha$) and the weight measuring unit 23 is in that case only capable of determining the component $F_y$ perpendicular to the surface. So as to derive the actual weight of the hopper, the component $F_z$ should be determined from the component $F_y$. The component $F_z$ is therefore calculated by means of the computing means 75 from the angle of inclination ($\alpha$) determined by the measuring cell, and the component $F_y$ measured;

$$F_z = \frac{F_y}{\cos \alpha}.$$

Once the component $F_z$ has been calculated, then, on the basis of this value, it can be determined in the manner described hereabove whether a readjustment of the desired bulk flow is required.

## Claims

1. An implement for spreading material, having a frame (1) and, mounted thereon, a hopper (2), the implement comprises an electronic measuring device (80) including a clinometer and indication means, **characterized in that** the indication means provide the farmer with information about the angle at which the implement is situated relative to a reference plane.

2. An implement as claimed in claim 1, **characterized in that** the indication means include a device with visual indication giving the angle at which the implement is situated relative to the reference plane.

3. An implement as claimed in claim 1 or 2, **characterized in that** the indication means include a loudspeaker by means of which an acoustic signal is supplied that is normative for the angle at which the implement is situated relative to the reference plane.

4. An implement as claimed in any one of the preceding claims, **characterized in that** the electronic measuring device includes reset means for adjusting the angle of the implement relative to the reference plane at a specific value and recording this angle value in a memory.

5. An implement as claimed in any one of the preceding claims, **characterized in that** the indication means give the angle at which the implement is situated relative to the direction of travel (V) of the implement.

6. An implement as claimed in any one of the preceding claims, **characterized in that** the indication means give the angle at which the implement is situated transversely to the direction of travel (V) of the implement.

7. An implement as claimed in any one of the preceding claims, **characterized in that** the implement is a fertilizer broadcaster.

## Patentansprüche

1. Vorrichtung zum Streuen von Gut mit einem Rahmen (1) und einem daran angebrachten Vorratsbehälter (2), wobei die Vorrichtung eine elektronische Meßvorrichtung (80) mit einem Klinometer und einer Anzeigevorrichtung aufweist,

**dadurch gekennzeichnet, daß** die Anzeigevorrichtung den Landwirt über den Winkel informiert, in dem die Vorrichtung relativ zu einer Bezugsebene befindlich ist.

2.  Vorrichtung nach Anspruch 1,
    **dadurch gekennzeichnet, daß** die Anzeigevorrichtung ein Gerät mit einer optischen Anzeige enthält, die den Winkel anzeigt, in dem die Vorrichtung relativ zu der Bezugsebene befindlich ist.

3.  Vorrichtung nach Anspruch 1 oder 2,
    **dadurch gekennzeichnet, daß** die Anzeigevorrichtung einen Lautsprecher enthält, mittels dessen ein akustisches Signal gegeben wird, das maßgebend für den Winkel ist, in dem die Vorrichtung relativ zu der Bezugsebene befindlich ist.

4.  Vorrichtung nach einem der vorhergehenden Ansprüche,
    **dadurch gekennzeichnet, daß** die elektronische Meßvorrichtung eine Rückstellvorrichtung enthält, um den Winkel der Vorrichtung relativ zu der Bezugsebene auf einen bestimmten Wert einzustellen und diesen Winkelwert in einem Speicher aufzuzeichnen.

5.  Vorrichtung nach einem der vorhergehenden Ansprüche,
    **dadurch gekennzeichnet, daß** die Anzeigevorrichtung den Winkel anzeigt, in dem die Vorrichtung relativ zu der Arbeitsrichtung (V) der Vorrichtung befindlich ist.

6.  Vorrichtung nach einem der vorhergehenden Ansprüche,
    **dadurch gekennzeichnet, daß** die Anzeigevorrichtung den Winkel anzeigt, in dem die Vorrichtung quer zur Arbeitsrichtung (V) der Vorrichtung betrachtet befindlich ist.

7.  Vorrichtung nach einem der vorhergehenden Ansprüche,
    **dadurch gekennzeichnet, daß** die Vorrichtung ein Düngerstreuer ist.


**Revendications**

1.  Matériel pour épandre de la matière, comportant un châssis (1) sur lequel est montée une trémie (2) ; le matériel comprend un dispositif de mesure électronique (80) comportant un clinomètre et des moyens d'indication, **caractérisé en ce que** les moyens d'indication fournissent à l'agriculteur des informations concernant l'angle selon lequel le matériel est situé par rapport à un plan de référence.

2.  Matériel selon la revendication 1, **caractérisé en ce que** les moyens d'indication comprennent un dispositif affichant des indications visuelles donnant l'angle selon lequel le matériel est situé par rapport au plan de référence.

3.  Matériel selon la revendication 1 ou 2, **caractérisé en ce que** les moyens d'indication comprennent un haut-parleur au moyen duquel un signal acoustique est transmis, qui est normatif pour l'angle selon lequel le matériel est situé par rapport au plan de référence.

4.  Matériel selon l'une quelconque des revendications précédentes, **caractérisé en ce que** le dispositif de mesure électronique comprend des moyens de repositionnement pour régler l'angle du matériel par rapport au plan de référence à une valeur spécifique et enregistrer cette valeur d'angle dans une mémoire.

5.  Matériel selon l'une quelconque des revendications précédentes, **caractérisé en ce que** les moyens d'indication donnent l'angle selon lequel le matériel est situé par rapport au sens de déplacement (V) du matériel.

6.  Matériel selon l'une quelconque des revendications précédentes, **caractérisé en ce que** les moyens d'indication donnent l'angle selon lequel le matériel est situé transversalement par rapport au sens de déplacement (V) du matériel.

7.  Matériel selon l'une quelconque des revendications précédentes, **caractérisé en ce que** le matériel est un distributeur d'engrais.

FIG. 1

EP 0 823 197 B1

FIG. 2

FIG. 3

FIG. 4

FIG. 5

Fig. 6

Fig. 7

Fig. 8

Fig. 9

FIG. 10